# EUROPEAN PATENT APPLICATION

(11) **EP 2 800 403 A1**
(43) Date of publication of application: **05.11.2014**
(21) Application number: 14167244.4
(22) Date of filing: 06.05.2014
(51) Int. Cl.: H04W 4/00

(54) **Communication tag, system and method**

(30) Priority: 03.05.2013 GB 201308065
(71) Applicant: Now 2 Now Limited, London EC4A 1BY (GB)
(72) Inventor: Cooke, Stephen, London, Greater London EC4A 1BY (GB); Balfe, David, London, greater London EC4A 1BY (GB); Redman-White, Bill, London, greater London EC4A 1BY (GB); McCartney, Steve, London, greater London EC4A 1BY (GB)
(74) Representative: Williams Powell

(57) **Abstract**

A communication tag (10) includes a processor (20) and a communication unit (30). The processor (20) is arranged to generate an address (40) to a remote resource, the address having a fixed component (41) and a variable component (42). The processor (20) is arranged to communicate the address (40) to a remote tag reader for establishing communication between the remote tag reader and the remote resource.

## Description

### Field of the Invention

The present invention relates to a communication tag, system and method that are particularly applicable for use in providing access to information and services via contactless data transactions.

### Background to the Invention

Various types of electronic tags exist today including Radio Frequency Identification (RFID) and Near Field Communication (NFC) tags. Beacons based on technologies such as the Bluetooth low energy (also known as BLE or Bluetooth Smart) can also be considered types of tags for the present discussion as they provide similar functionality to RFID and NFC but do not require as close physical proximity to the reader as RFID or NFC.

NFC and RFID systems include good examples of unpowered passive systems. These are contactless data exchange systems. NFC is generally taken to mean the systems as specified by NFC Forum Inc (www.nfc-forum.org); RFID usually refers more generically to contactless systems used inter alia in stock tracking, keylock systems and other well-established commercial and industrial applications.

Contactless data exchange systems of these types work on the principle that an electric current is induced in the antenna of a device A (the 'target') by virtue of the presence of a radio frequency (RF) magnetic or electromagnetic field being generated by another device B (the 'initiator').

The target is thereby powered and triggered to carry out operations, for example involving the transfer of local data to the initiator. Communications may be one-way or, in the case of the NFC protocol, two-way between the devices.

An initiator requires its own power source independently of the induction method referred to above, in order to generate the RF field to induce the current in the target.

Contactless systems can be divided into two main categories - passive and active. Active contactless systems typically has some form of power independently provided to devices. In the case of passive contactless devices, a receiving device is not typically powered independently of an initiator and is configured to respond to an initiator by transferring some stored and often fixed data. In most systems, there is a device known as a tag that is queried and from which data is obtained by a reader device (which may also incorporate tag functionality to be queried by other readers).

Contactless systems adopting the NFC standards referred to above are well documented and there is at the time of writing a steady increase in commercial applications and devices adhering to those standards, for example in mobile telephone handsets, which act as initiators to obtain data from a target that is then used to launch internal processes.

One reason for this growth in the market for RFID applications is that tags are simple durable, small, and cheap to manufacture. Passive tags in particular can be in the form of a simple printed circuit board or other circuit arrangement that can be embedded within stickers, key fobs, badges, posters, book covers and other physical embodiments.

A user can, for example, make brief contact between a business card and their NFC enabled phone (the term tap' will be used hereinafter to denote this action) and acquire the owner's contact details for direct input into the user's address book on their phone. They can tap a 'smart poster', (that is, a poster with an embedded tag) to automatically launch their phone's browser and visit an internet uniform resource locator (URL) related to the poster subject matter and content.

NFC tags contain data that is typically read-only but the NFC specifications cover multiple types which provide varying degrees of capability in terms of memory, security, endurance and so on. The data for transfer by the tag to the initiator is generally encoded by the supplier before delivery. These can be 'locked' to prevent subsequent modification, although unlocked tags can of course be written to (and/or have their existing data overwritten) by a suitable device at any time.

How the initiator deals with the data received from and/or exchanged with the target is dependent on the configuration of the initiator. In the case of an initiator being a mobile telephone such as a smartphone, that configuration may be held within the handset's operating system. This means that supported protocols may be used to offer default services to the user without further configuration (for example, tapping an NFC tag with a mobile phone having internet access to go to a URL). It will be appreciated that other portable or fixed location devices may be initiators including desktop PCs, servers, laptops, tablet computing devices, smart watches and bespoke tag-readers dedicated to a particular application (such as a point of sale device).

Operating system configurations may vary and as a result not all the capabilities defined by the NFC specifications may be supported. For example, the NFC specifications include data protocols and processes that can acquire data from the target which, in conjunction with local processes on the initiator, can enable the latter to establish communications with (a process hereinafter referred to as 'pairing') another wireless device, for example a Wi-Fi access point. However, at the time of writing, such functionality was not supported in the majority of mobile handsets which otherwise support NFC.

One mode of operation that appears to be widely supported is the acquisition by the initiator of an address such as a Uniform Resource Identifier (URI) from the tag. The initiator then launches a browser and uses the URI to establish a network connection between the initiator and a web server. For example, tapping an NFC tag with an internet capable mobile handset, where the tag is programmed to respond with the URL WWW.GOOGLE.COM, will result in the handset launching its browser application and connecting directly to Google. In another example, the NFC tag may have a URI that causes an email to be composed to a person in the handset's email client, a simple messaging system (SMS) message entered into the handset's SMS client or a call initiated to a number encoded in the URI.

Such services are particularly effective where the URLs or other identifiers in question are lengthy or unknown to the user. Instead of having to search for the URL or enter it manually, the user simply performs a quick physical operation that results in immediate access to a website (data network conditions allowing), call to a user etc.

Almost all web based systems respond to data acquired from a tag by associating that data with a content or service (e.g. a web page or device pairing process). This may be done locally on the initiator, or the initiator may submit the tag data to another entity or multiple entities and transact with it/them to determine what operation should be carried out. For example, the URL provided by the tag may be fixed and lead to a website or may include data that allows a web server to dynamically redirect the URL to an appropriate website.

### Statement of Invention

According to an aspect of the present invention, there is provided a communication tag including a processor and a communication unit, wherein the processor is arranged to generate an address to a remote resource, the address having a fixed component and a variable component, the processor being arranged to communicate the address to a remote tag reader for establishing communication between the remote tag reader and the remote resource.

The processor may be arranged to generate the variable component, the variable component encoding data depending on circumstances arising at the time of generation of the address. The processor may be arranged to generate the variable component, the variable component being substantially non-sequential. The processor may be arranged to generate the variable component in dependence on a time measurement associated with the time at which the variable component was generated. The processor may be is arranged to encrypt at least a portion of the variable component. The encrypted portion may be is based on one or more other parameters in the variable component and may comprise a cryptographic hash.

The tag may comprises a selected one of: an RFID tag, an NFC tag or a Bluetooth low energy device.

The circumstances may include one or more of data received from a sensor on environmental conditions, data on location, data received from a sensor on network conditions; data received from a sensor monitoring one or more physical attributes of the tag; data on a current state of the tag.

According to another aspect of the present invention, there is provided a communication system comprising:
a remote resource; and,
a communication tag as claimed in any preceding claim, wherein the address is an address of the remote resource, the processor being arranged to communicate the address to a remote tag reader system for establishing, in dependence on the address, a communication session between the remote tag reader and the remote resource.

According to another aspect of the present invention, there is provided a system arranged to receive a communication from a communication tag reader, the communication being dependent on data obtained by the communication tag reader from a communication tag and being addressed to an address having a fixed component and a variable component, wherein, in dependence on at least the variable component, the system being arranged to return data to the tag reader.

The returned data may comprise data for use in further communications with said tag.

The system may be arranged to validate at least a portion of the variable component as having been generated at the communication tag and return data to the tag reader in dependence on the validation.

The variable component may include encrypted timing data, the system being arranged to decrypt and validate the encrypted timing data, and to return the data to the tag reader in dependence on the validation.

According to another aspect of the present invention, there is provided a data communications method comprising:
generating, at a communication tag, an address to a remote resource, the address having a fixed component and a variable component,
communicating the address to a remote tag reader;
establishing communication between the remote tag reader and the remote resource using the address; and,
returning, in dependence on at least the variable component, data from the remote resource to the tag reader.

Embodiments of the present invention seek to address limitations in the architecture of existing tag systems and capabilities of existing tags that reduces the usefulness and applicability of tags.

Tag types include passive RFID, Near Field Communication (NFC) target devices and beacon type devices such as Bluetooth Low Energy or Bluetooth Smart devices, described in more detail later. Selected embodiments presented include systems and methods for modifying, verifying and managing the data on tags so that, for example, they can present a variety of data to users while at the same time maintaining a format that is compatible with most tag reading systems (for example, Android mobile phones).

Embodiments of the present invention are particularly applicable to use-cases involving determination of location, the 'smart labelling' of products and artefacts, and content licensing and distribution via tags.

Various embodiments are described below. In one preferred embodiment, a system is arranged to receive a communication from a communication tag reader, the communication being dependent on data obtained by the communication tag reader from a near field tag, the system being arranged to return data to the tag reader on further communications with said near field tag.

The method used to produce the variable component can vary (for example with a view to the cryptographic signing data so that we know the component came from a specific tag) and can change from time to time and/or as determined by other factors. The tag itself may have the functionality to trigger the change or it may be due to some external data being received (such as a new cryptographic key, change in environmental conditions). Methods could be applied at some times and not at others, and in response to external and internal triggers - for example, a particular method could be triggered by infra-red or other sensed conditions/stimuli such as radio waves, Bluetooth signals etc.

Cryptographic signatures may include timestamping and/or location data. The data involved need not necessarily be exclusively local to the tag and additionally may also involve user input.

Generation of the variable component may proceed in different ways in discrete stages (or according to tag 'states') where the state changes were triggered by events. For example, the tag may be a form of state machine, providing different variable components in response to taps depending on its state and/or other influences.

The variable component may include a parameterised URL (or other data provided by the tag) that provides feedback on the internal processes or states of the tag.

### Brief Description of the Drawings

Embodiments of the present invention will now be described, by way of example only, with reference to the accompanying drawings in which:
Figure 1 is a schematic diagram of a communication tag according to an embodiment;
Figure 2 is a schematic diagram of a system according to another embodiment.

### Detailed Description

Working with tags involves the following steps, each of which has its own challenges.

### Sourcing

Tags can be pre-programmed with data or programmed later. Programming at the time of acquisition adds to the cost. The cheapest tags are supplied in 'sticker' format, attached to labels, but these are not durable and so more expensive form-factors have to be considered, designed and produced.

Once manufactured, it can be difficult, before or after delivery, to identify which tags are which. For example, if you order 1000 NTAG203 tags in white sticker format where each tag is encoded with unique data, it may be very time consuming and difficult to work out which tag has which data encoded. If they get mixed up and out of any defined sequence, reading each tag may be the only solution. If you want to use a management system to associate content with just 20 tags out of the 1000, how do you easily identify the 20 tags that you are working with? You can of course print the unique codes on the stickers themselves, or use some form of colour or other coding, but unique codes may be lengthy, may still need to be entered one by one on the management system, and their printed representation may conflict with the space and design requirements of other printed content (e.g. a logo).

After delivery, how can you ensure that your tags are not reprogrammed? If you use locking to avoid this, that still means - unless there is some PRIOR association between your user account and the tag codes - that anyone with access to the same management system can read the tags and start managing them.

To save time and money, an independent retailer may acquire a batch of unique codes from the management system operator and then distribute these to any number of customers without costly tracking and discrimination. When he runs out of codes, he simply orders more. Any solution to this must allow such flexibility and also be secure AND efficient.

Preferably, sourcing tags should be an 'invisible' process to a management system operator. Take as an example the management of parks where the location and condition of trees is to be handled. If the managers need to tag 50 trees, they focus on that process and the required tags are automatically encoded and despatched by a supplier, without the operative having to specify them. This can be done by linking tag networks (groups of tags with specific attributes, e.g. TreeBook Stoneleigh Street Network) with tag types (including customisation factors e.g. overprinting, form factor etc) and the content that is to be associated with them, thereby creating a network 'profile'. The profile can then be presented as a single order control within a website, thereby productising it as a single commercial solution: ordering the solution simply involves tapping a control for 'TreeBook' and specifying a number of TreeBook tags. The tags are then encoded at manufacture with a set of unique codes, each of which is associated within the management system with a pre-defined network (e.g. 'My TreeBook Tags 1') and the redirect to the TreeBook service.

During sourcing and delivery, tags may need to be in different states, where that state is reflected either in the tag encoding or in the management system that interacts with that encoded data, or both. For example, a tag may be awaiting registration to a specific user account, or to a specific tag network, or to a specific content stream. State management is also important for tracking and identifying faulty tags.

### Deployment

Tags have to be positioned in an accessible and visible site to attract users, in such a manner that they can be easily installed with minimal risk of subsequent unauthorised removal or damage.

Deployment is also a problem because the operation is carried out on-site, often by third parties. This means that, although a network management systems operator may in advance be able to allocate, for example, a tag to be encoded with data relative to a location in for example Stoneleigh Street, installation may take place in the adjoining Ansleigh Place by mistake. Managers may need or want to authorise specific installation personnel to install specific tags, or tags in specific locations, at specific times, or combinations of these and other environmental or operational variables.

Furthermore, it is often the case that deployment leads to the fixing of environmental variables related to one or more of the services associated with the tags being installed. If a user puts a tag on an oak tree, it may be necessary - to ensure that the relevant information is delivered to the tag - to flag the tree species during installation. If multiple applications are going to be using that tag, there may be different data sets associated with each application and these might need to be managed by a single management tool that enables the operative, when installing the tag, to quickly and easily enter multiple data items for multiple services, as determined by the installation process, geo-location, contextual location or other installation variables.

Tag deployment and installation therefore involves compliance with specific installation requirements and procedures as well as data processes. From the tag network point of view, it is also necessary to have a degree of certainty that a tag which, for example, is used to access information about the Peter Pan statue is, in fact, attached to that statue and not mistakenly put in some other location. As another example, a retail chain may acquire tags in bulk for deployment in its stores, but it then falls to the local staff to install them. How does the retailer ensure that they have complied with a prescribed procedure for deployment and installation?

Installation and deployment compliance issues can become even more complex where a widespread network of consumer-installed tags (e.g. on home appliances) is created.

### Security

Once installed, there are a number of use problems. The first is security. This includes actual data security (where sensitive data is transferred) as well as network ownership. The latter problem, referred to hereinafter as 'network cloning', involves unauthorised third parties reading tag content and building their own services to enable their customers to make use of the tags (which, if they are to be as widely used as possible, cannot rely entirely on some proprietary application for reading them).

For example, I create a tag with the URL www.mytags.com/nelson and put it on Nelson's column, mistakenly confident that all tag transactions will now be handled by my webserver at mytags.com. However, one of my competitors reads the tag and associates it on their own system with Nelson's Column. They then create a travel guide application that, when it reads the tag, intercepts the URL before the device browser is launched and, instead, provides the user with information about Nelson's Column from its own service.

### Validation

If a tag contains a URI for Service A, then a simple data management system might assume, if a request is received for Service A, that the user sending the request had just tapped the tag and was located adjacent to it. In the real world, this may well not be the case. The user might have:
- stored the URI on their device and used it later, either on site or elsewhere
- stored the URI on their device and forwarded it to another user.

Thus the validity of a service request may be compromised in terms of time, location and/or user.

Conversely there may be issues either with the data itself (possibly invalid due to some form of corruption and/or tampering, for example) or with its reception; it may not be received at all, perhaps because the user cancelled the transaction or due to network conditions.

In many cases, it may not be possible to achieve certainty regarding the relevance of the request to the location in question. A system is needed that takes multiple inputs from device location, GPS, network location, previous user location data, user habits, IP address histories, local sensors that track local variables, ambient location noise and other data to create a percentage likelihood of the user's actual location. This percentage can then be used to compute a location value for the user, from 100% - for example where a user has tapped a static tag that features a variable encoding system (see later) that ensures that every transaction is both timed, located and uniquely encoded - to a significantly smaller percentage value, for example, where a user has tapped a tag on a luggage label affixed to a bag that has been lost in transit on an international flight and could be anywhere in the world. Percentages can also be computed by bearing in mind not just where the user is, but where they cannot be. These percentages can then be used to guide the network owners' possible actions in response to a query from such a user, or to establish different values and commercial charges for - for example - advertising inventory or other services which might be targeted at specific locations

Similarly, it may be important to know that a mobile device communicating tag data, supposedly received from a tag it has just tapped, was not simply communicating data which had been, for example, saved as a bookmark. A window cleaning service might ask operatives to touch a tag to confirm attendance on-site: the system needs to be able to verify that the operative is indeed on-site and has not simply copied the tag data and is submitting it from another location.

### Authentication

In the systems under consideration, most tags will be open for public use, but some may be targeted at specific groups with different access privileges. A data management system may need to work with the tag system to carry out user and/or service authentication. For example, a particular game being played on mobile handset might be used to access tags to allow the player to search for a specific game artefact 'hidden' in a tag. In this case, the management system might need to authenticate the application and/or the player.

'Users' may not necessarily be humans; they might be other devices or artefacts. For example, a swinging door might cause communication between two contactless technology devices. A user's device might have been stolen. The management of devices within the network needs to be carefully addressed.

### Management

When tags are 'tapped' or otherwise triggered with some mobile handset or similar reader, the data they deliver can result in tag-specific content being displayed on the user's device. Managing what content is displayed in response to which tags are being tapped is relatively simple when there are only a small number of tags. However, in the 'Internet of Things' envisioned by the technical community, the number of tags may be enormous - billions or even trillions of individual touchpoints. Managing content over networks of this size, balancing the requirements of convenience on the one hand and absolute relevance of content for the user of a specific tag on the other is not trivial and would be outside the scope of most conventional network management solutions.

### Tag Proposition

Once deployed, it may be necessary to associate some kind of proposition with a tag. For example: "Tap here for local offers". However, it may be requirement of the system to deliver different content at different times, so the proposition may need to vary and/or be synchronised with the content being delivered by the tag. This can be achieved if the tag management system can also modify, for example, the content displayed on a Visual Display Unit into which the tag is embedded or associated.

Embodiments of the present invention seeking to address these points are set out below.

### Sourcing Solutions

The management of tag deliveries and deployment can be made much simpler by including information on each tag that identifies its order number and serial number within that order. This information can optionally be combined into a single value by encryption or some other process and included as an element within a URL (which itself can subsequently be shortened using a process similar to that employed by bit.ly and other similar solutions).

This enables a dual-interface management system whereby an operative can use a web browser to locate and manage an order and a mobile device browser or application to identify tags within that order. For example, a supplier of tags receives five orders of different tag types from a wholesaler. The supplier simply needs to tap a tag from each order, using a mobile phone with a suitably encoded application, which connects to the same management system database management system as the supplier's web-based system, to identify the order within their desktop management system, assign it to their account or that of a customer, and carry out other management tasks.

If the tags are on a reel, then the supplier can tap a tag and enter a value to immediately identify a range of physical tags. For example, the supplier can tear off a strip of ten tags, tap the first tag, enter '10' on their management interface, and then carry out management functions on the entire strip without having to tap each tag. Where thousands of tags are involved, this can be very useful.

As another example, John comes into the office and asks for 100 tags to stick on wine bottles. The supplier picks up a reel, counts off 100 tags (a simple process of folding the strip in tens, ten times), tearing them off, tapping the first tag in the strip, entering the strip count (100) and then quickly assigning John the user rights required for those specific tags.

During the sourcing process, tag deliveries may go through a number of stages: sourcing the physical tags, encoding them with a unique code that will be used by the management system to identify them and associate other content (e.g. URL redirects) with that code, packaging, despatch, delivery, and receipt. In each of these cases, an operative may be able - once the tag has been encoded - to tap any tag within the order to change the state of all tags within that order. For example, the states could be packed, despatched, and received. Operatives at the supplier depot could tap the tags once packed, use the code on the tag (which includes the order information) to update a record within the management system related to that order, so that a customer can see that the tags are now 'awaiting despatch'. Similar changes could be made to the tag and order records at the time of despatch and - by the customer - of receipt. The tag could be configured to deliver different data to an initiator in dependence of these three (or other) states. This could be useful if, for example, a customer did not want the final tag data to be visible to any third party prior to receipt of the tag by the customer.

### Deployment Solutions

Deployment issues require a remote operative (e.g. someone in the field) to be able to access a management system and to easily enter information relative to the tag location and context. The information required may differ depending on the content being delivered to the tag - and a tag may have numerous different content services associated with it.

For example, James is affixing a tag on a vehicle in a dealership. The tags in question are to be used for example by the AA for delivering breakdown information to anyone who taps the tag, and by the dealership for delivering warranty information.

James needs to be able to tap the tag with his initiating device (e.g. his mobile phone), whereupon the tag and the device act in concert to display on the device the management system website. He signs in and this identifies him as dealership employee and automatically displays a menu of information required by the dealership content service, for example, the vehicle serial number. He enters this information and the serial number is now associated with the tag number on the dealership management system.

If James had, for example, identified himself as an AA operative, the management system might have requested him to select the make of car from a list, plus the year of manufacture etc.

The management system therefore solves many deployment issues by linking the tag data (acquired during the tag tap process), the identity of the operative and the content service to be updated, and the specific content requirements of that service. In a single transaction, information can be written back to both the tag management system (e.g. the name of the operative, the type of tag and its life expectancy etc) and to the content management system (the type of car etc). The two systems may or may not be integrated and the operative's initiating device acts as the 'bridge' between tag management, content management, and user management.

### Security, Validation, Authentication etc

Most of the issues relating the remaining challenges outlined earlier can be adrdessed by modifying data on tags, so that - preferably - the data transferred by the tag to the initiator is in a form that meets one or more of:
- substantially unique i.e. the data transferred is different each time;
- anonymous/encrypted/unpredictible i.e. the data does include any obvious association with the tag (for example, a sequential list of numbers would be different each time, but would not be of much practical use);
- time stamped or stamped with some other verifiable and variable contextual data;
- able to be associated in some way with the device and/or user that tapped the tag;
- verified with regard to its context (location and other contextual variables).

Any solution needs to be practical, robust and affordable. Tags are cheap. Data can be written and read to the tag by a tag reader/writer and so a brute force solution to many of the issues above would be for an operative to re-program the tags every time they were used - but, for most situations, this is unrealistic.

Remote modification, on the other hand, would involve some kind of local power source and network connection to the tag, either or both of which may be impractical, although a proposed remote modification solution is outlined below. And finally, the tags transferring the data must be easy to manage and deploy.

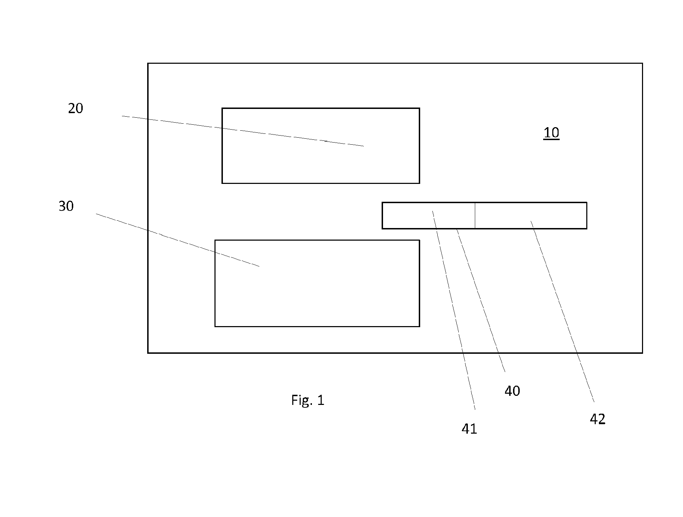

Figure 1 is a schematic diagram of a communication tag according to an embodiment of the present invention.

The communication tag 10 includes a processor 20 and a communication unit 30. The processor 20 is arranged to generate an address 40 to a remote resource. The address has a fixed component 41 and a variable component 42. The processor is arranged to communicate the address 40 to a remote tag reader for establishing communication between the remote system and the remote resource.

In one example, the address is a URI (uniform resource identifier) such as a URL (Uniform Resource Locator) to a website or other resource on a data communications network. In such an example, the variable component may comprise parameterised data for a number of fields. Alternatively, the address may be, include, or encode, contact information such as a telephone number of a person or service to be called. The variable component may compute a telephone extension, dial-tone codes for progressing through an interactive voice response system to an appropriate destination or other data for accessing or passing to a destination.

In one example, the variable component of the address includes a timestamp. In a preferred embodiment, the variable component includes data encrypted by an encryption scheme having a shared key or other mechanism such that the encrypted data can be at least authenticated (and in some embodiments retrieved) at a data repository, server or other system to verify attributes of the communication such as time and/or location.

It will be appreciated that the tag will include other components such as an antenna. It may also include a memory, a cryptographic co-processor and/or a pseudo-random number generator.

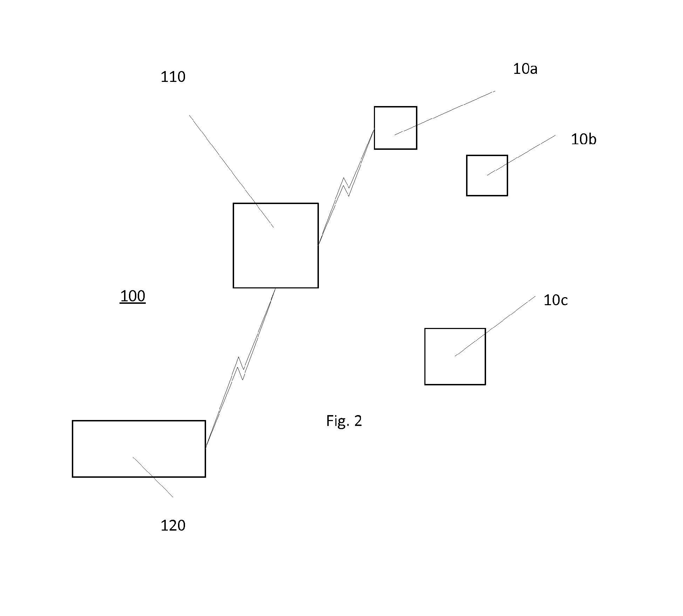

Figure 2 is a schematic diagram of a communication tag system according to an embodiment of the present invention.

The communication tag system 100 includes a tag reader system 110, a plurality of communication tags 10a-10c and a server 120. The tags 10a-10c provide addresses in response to events.

In one embodiment, an event may be in the form of an NFC/RFID "touch". Upon the tag reader system 110 being actuated (by coming into range of the tag and optionally being triggered by a touch action), it is arranged to communicate with the respective communication tag 10a-10c to retrieve an address therefrom. As indicated, the trigger event may be in the form of a "touch" triggering activation of a passive tag such as an NFC or RDIF tag or it may be in the form of a data exchange with a Bluetooth beacon. In the case of a beacon, the beacon may regularly serve up addresses corresponding to a timestamp of a current clock (the change of a time period being an event) or alternatively it may serve up addresses on demand and each request being an event.

Where a clock is used, the clock may be from a system or component integral to the tag, based on a network or other signal received or it may be a clock signal of the user's mobile phone that is provided as part of the data exchange.

In one example, each tag 10a-10c provides a substantially different address in response to each event. The address includes a fixed component (such as the URL to the server 120, for example: http://www.a_server_at_123.com) and a variable component. The variable component may vary depending implementation. In one example, it may have a fixed format number of parameters that may include one or more of:
A timestamp;
An identifier for the tag;
A cryptographic signature such as a cryptographic hash of other parameters.

Optionally, parameters may also include data on events or conditions of the tag such as environmental conditions over time or at that time, whether an accelerometer has detected sudden jarring etc.

The address is provided to the tag reader system 110 which uses it according to its programming. For example, an NFC reader in a mobile phone receiving a URL address may open the phone's browser and direct it to the address. In one embodiment, an application running on the mobile phone may decode or otherwise rely on the address and access the server 120 based on the received address.

Upon receipt of a communication with the variable components, the server 120 processes the communication accordingly. For example, it may display an appropriate web page, it may check the authenticity of the parameters and cryptographic signature, it may retrieve further data for communication back to the tag reader system 110, it may log some or all of the data as events received from the tag. In one embodiment, the server 120 may return data to the tag reader system 110 for use in further communications with the tag 10. For example, a code or other identifier may be returned to enable the tag to be programmed or changed or for other data on the tag to be retrieved.

The variable component may include a random number; the functions generating the variable component may change over time or in response to events (for example to make it more difficult to reverse engineer or guess a correct address).

The communication process may be completed with a single tap or other triggering event by the tag reader system 110 or it may be that the communication process may entail a number of consecutive taps in which data is relayed back and forth (preferably with appropriate prompts to the user on the tag reader system 110 or some other display associated with the tag). It may be that how the variable component of the address is generated is dependent on triggering events or systems inside or outside the tag.

In one example, a tag may maintain a random number generator and stores a private key (also known to the server), in addition to a standard unique tag ID and a public URL.

On tap, it presents the user with the public URL parameterised with:
- the tag id
- the random number
- a signature generated using the random number

The server 120 could then:
- fetch the right key for the tag ID
- verify that the signature and the random key match
- eliminate the random number as a viable number (so can only be used once)
...and depending on validity, present the user with the appropriate web content.

One could then supplement this example by including a clock on the tag (or get the time in some other way) and then include a time-stamp (so not only would the server know the tag in question generated the URL, but also when it happened) in the data presented.

### Data Modification

In order to address many of the requirements above, the information on a tag and/or associated with it preferably needs to be changed, sometimes on a regular basis. As described earlier, with simple tags the only way to modify the data on the tag is to use an initiator to 'write' new information to it. Ideally, simple embodiments need to be introduced that can be realised at low cost and which can address the requirement for data modification without necessarily involving physical connection with other devices or the expense and maintenance liability of batteries etc.

There are various elements to be considered when creating a process and/or designing new tag technologies to enable the changing/modifying of tag data. These include:
- **The nature of the data to be modified:** for example, the data could be one or a combination of a URI, a telephone number, a tag or process ID, and/or a set of data elements which provide the source for a process that will produce the data to be modified.
- **The modification method:** this can involve, with respect either to all the data or a part of it, substitution, concatenation, combination, computation (including encryption), appending new data etc. For example, in a list system, one data item is substituted for another as determined by the adjustment of a list pointer; alternatively, two bits of data can be combined or concatenated in various ways. Finally a new data value can be computed, depending either upon the original data or some other information, or new data can be appended to the old data or substituted for a part of the latter.
- **The trigger criteria:** these can be a combination of events and/or data that determines when the data modification takes place and possibly also the manner of modification itself. Since it is desirable that a third party should not know when or how data is modified, and possibly essential that any associated data management system should know, the trigger criteria are likely to be significant.
- **The delivery/acquisition of trigger criteria.** Ideally, trigger criteria are delivered remotely, under the control of a data management system. If they are managed locally, the management system will need to have some foreknowledge to be able to interpret data submitted to it following a transaction, so as to determine its validity and associate the correct content with the data. For example, modification could be triggered by a change in ambient temperature or some other condition, as detected by a local sensor.
- **Data source:** although the principle of self-modifying devices implies that the process is carried out locally, albeit possibly triggered by another device, the data modification process may be supplemented by data acquired from elsewhere: from a user, from a remote device or sensor etc.. Methods of delivering data range from the usage of available wireless spectrum through to audio signalling, certain light wavelengths, vibration, direct connection to a sensor or other device, a typical initiator/target contactless transaction and so on.
- **Data validation:** once modified and delivered as a result of a transaction, the data needs to be validated. This validation may be required in respect of different criteria. Data may be temporally compromised: e.g. a tag code received by a server was generated two days previously and may therefore trigger the delivery of content and services that do not apply to the user's current location, or that is out of date, or both. Furthermore, the validation may not be a black and white process: it may be necessary to take into account multiple criteria - the location of the handset, other data derived from the device or from other local sensors, and to establish a scale of presumed confidence in the transaction. For example, if a transaction reports that the cell tower of the mobile network is located 100 miles from the tag, confidence in the transaction might be correspondingly low! If a tag that has been modified with data from a local temperature sensor has generated information reporting a temperature below freezing, then one might consider either a malfunction or a dubious transaction. Other criteria could include WiFi IP addresses, consistency with previous user behaviour, probability of the data received being currently valid and so on.
- **Powering the process:** data modification processes may have specific power requirements that go beyond the normal induction of current in a tag by the initiating device.

Note that in this document the term 'device' can mean a single device or a device acting in communication with other local or remote devices to execute a process, communicating via networked or peer-to-peer connection. For example, if a device acts on some information it may do so locally or exchange that information with a remote device for processing as part of the operation. A device may also be taken to mean, if a skilled reader would clearly infer it, to refer to an application or service running on the device.

Although the focus of this application is on the data held on the tags themselves, there are several instances where reference to this data can be taken to indicate data referenced by that data and held elsewhere.

### Partial Data Modification

Typically the data transferred by a target can be considered as a single data element (e.g. a URL). In preferred embodiments, at least selected tags have built-in encryption functions which serve to modify the data to be transmitted. For example, a passive tag includes a processing device (which is not normally the case for passive tags) that uses at least part of the current induced by the reader to trigger two separate processes: the encryption of the source data and the transmission of the encrypted data to the initiator.

Preferably, the encryption process takes one or more inputs such as a random number and/or timestamp from which an encrypted hash is created. The inputs would be communicated as well as the encrypted data to a data repository such as a server hosting an authentication service. Using asynchronous or synchronous encryption, the counterpart key can be retrieved by the server and the hash recomputed from the inputs to verify that the data was produced at the timestamped time by the tag.

Such an arrangement prevents unauthorised parties from copying the content of the tag because each time it is used, the tag generates an encrypted one-time value. For example, a tag might contain a unique encrypted value which can be used by the initiator to log in to a remote device and verify that the tag transaction has taken place.

However, this requires some pre-installed specific software on the reading device, capable of receiving the encrypted data and then either decrypting it or forwarding it to some other system for decryption.

This existing approach is no use if you want to use a tag to deliver a URL to an initiator which the latter can use to establish a web session. That is because the tag delivers a single encrypted value that does not conform to the URL standard. This limits the potential market for the service to bespoke applications. The general public would not be able use such a service because the encrypted data would not be recognised by standard mobile phone operating systems.

The solution is to design a tag that can store and/or generate two or more separate data items and to generate or vary by encryption and/or other means one or more of those data items only and then to combine the different data elements into a single multi-part value.

As an example only of the multiple embodiments of such a process, item A could be a static unchanging URL address and item B a unique code. In that example, the tag is configured to carry out the encryption of Item B (having either retrieved or computed it); the concatenation of Items A and B; and the transmission of both items as a single valid URL (called herein the C-URL for Concatenated URL) to the reading device.

The reading device, detecting a valid URL, simply launches a browser and passes the C-URL to a remote web server or other network entity. The network entity is configured to detect Item B and submit it to a decryption or other process, either locally or remotely. Once decrypted, Item B can be used to identify the relevant content processes or other data and then communicate with the reading device regarding that content or process (e.g. to present a particular web page).

The advantage of this system is that the reading device can operate in a default mode - that of receiving a URL from a tag and automatically launching its browser to connect to the network entity addressed by the URL - while at the same time making use of tag-encrypted data.

Also one category is static and may not need to be updated in any way: in the above example, only Item B needs to be modified although in other embodiments multiple items could be modified using one or more processes, which may be different for each item. Effective network cloning is made more complex.

The two or more data stores/sets could also be used in other ways. The tag could be configured to work with different storage or sets depending on tap or other events, for example shocks, temperature fluctuations or other sensor inputs. A tag could alternate between data sets each time it was tapped. It could select data sets in dependence on data received from the initiator during the tapping process, or on data received from elsewhere using power generated as set out later in this document.

Using the approach outlined above, a system can be constructed that enables, for example, any member of the public equipped with a standard Bluetooth, RFID or NFC-enabled mobile phone to:
- acquire encrypted data from an Bluetooth beacon/RFID tag/NFC tag
- use the standardised URL process to open the web browser
- connect to the web server specified by the URL, which in turn can either decrypt Item B itself or pass it to another device or process for decryption
- receive data that will enable their device to represent a page, launch another process or take other action.
...without the user having to download a specific application for the purpose. As a part of the process the web server and/or other connected device, once Item B has been decrypted, can match that value against a table of locations, tags, user data or other information which it can use to ensure that the data sent to the user's device is relevant.

### Rewriting tags

The simplest way to change data encoded on a tag is to rewrite the tag. This need not involve changing all of the information: it could involve first reading the information, perhaps passing it to a remote device for analysis, and then receiving, computing or requesting user input to determine a complete or partial new data set for writing back to the tag.

Determining the data for writing to the tag - and/or determining whether or not to trigger such modification - could also involve responding to local conditions. For example, an operative could read a tag with a device equipped to receive sensor data and then use the sensor data (or time or other information) to compute a new value for writing back to the tag. The sensor could provide accelerometer, magnetometer, light, heat, sound, moisture and other sensing capabilities.

The reading device could use a camera to capture local visual data, which could be a visual code such as a QR or other bar code or some other design, text or number. The location of the tag could be designed to present a unique configuration to the camera which would enable it to be recognised, for example a picture frame or plinth or other device perhaps with additional markings to enable it to be uniquely identified. Information captured in this manner could also be used to inform many of the other processes outlined in this document.

Ideally, when sensors are involved in processes that lead to the triggering of changes in tag data, the conditions involved should be detectable by a remote management system. For example, if user devices are able to sense a local condition - temperature, for example - and were arranged to trigger a modification process when the temperature falls below freezing, it would be useful if the remote management system could separately be able to determine - perhaps by communicating with the local devices - the local temperature. It would then be able to anticipate, or otherwise manage processes relating to, changes in local tag data.

### Self Modification

Many of the processes described above with regard to the rewriting of tag content by users can also be applied to self-modification by tags. Sensor data, information related to networks or matrices of tags and the usage of them, could all be used with regard to self modification.

Tags can modify their own data in several different ways as previously suggested. For example, we could program a tag to modify its own content after every nth tap or after the elapse of a period of time or even completely randomly, where the trigger for modification changes (e.g. after every 5 taps, after which the tag resets the value and will then next update after e.g. 22 taps).

Data can be varied by computation but it can also be retrieved from a local or remote list or other arrangement of multiple data items. In this manner, the data presented by a tag to an initiator can vary from time to time. Simple list systems are not ideal because they need to be implemented in such a manner as to avoid being harvested by third parties (e.g. by repeatedly triggering a target to deliver list items until the list loops back to the beginning or reveals some pattern to enable future items to be predicted).

It would be useful if users could re-seed such processes during tap transactions, optionally in conjunction with some of the other processes set out herein - for example resetting a cryptographic key or the start position and/or the interval (eg take every n item in the list) to be applied to a list.

Sequences of data can also be problematic because of user behaviour. Let us suppose that a system is designed to accept Item 5 from a list and to reject any item subsequently presented to it if it came from earlier in the list. However, if a user acquires Item 4, stores it on their device as a bookmark, and does not pass that item until after Item 5 has been processed by the system, Item 4 might be invalidated. This may be suitable for some operations but could also cause customer relationship problems.

Similar problems might arise if a system was programmed, on receipt of Item N, to expect then to receive Item N+1. But Item N+1 may be acquired but not presented, and then when Item N+2 is presented it will be invalid and the system will stall.

The benefit of lists is that they are computationally simple and cheap to implement.

One partial improvement to list management is to set the list pointer according to other trigger criteria. Any criteria that are known to both the tag and to an associated data management system (which also knows the list content of the tag) will suffice - the objective is simply that the data management system knows what criteria currently apply and therefore what list item is currently valid.

Time can be used as a simple trigger criterion. For example, if a list has 28 entries and the tag is configured to maintain an internal clock or to receive time codes from some other source such as the interrogating reader device in the transaction and then point to one of those entries according to one of four timeslots over a seven day period, then the process of network cloning would be more complex and time consuming. The longer the list and the more complex the criteria to determine the position of the list pointer, the more difficult it would be to clone the network.

A list pointer could be reset in other ways, using different triggers, for example remote control mechanisms such as infra-red or RF activity.

The tag could also compute a new value internally depending on information received from an initiator or other device. For example:
- an initiator passes the time on its internal clock to the tag;
- the tag uses the time and perhaps other local data to create an encrypted value and passes this value either alone or in combination with other data back to the initiator;
- the initiator presents the data received to a remote management system;
- the remote management system decrypts the information, verifies the current time and determines whether or not the data received is valid for a specific time frame.

The time source may be the initiator or some other device capable of transmitting a time code or other data that from which a specific time can be read computed or inferred. The source could be either local or remote.

For example, it could be, by way of example only: a clock or other timekeeping device or system, incorporated into or local to the tag or remote where the data was accessible by physical or wireless network or broadcast.

As an example of the latter, a radio broadcast might include a specific transmission pattern, generated either explicitly or in the process of encoding other content, at a specific time, which could therefore subsequently be associated with that time (e.g. if that pattern was presented by a Target to an Initiator, it could be matched against a known timeframe) and used to timestamp a transaction.

Data validity would vary according to the disparity between the time at which the data was originally modified and the time at which it was presented to the data management system.

If the user's device had an incorrect internal time, or the system could not verify the time encoded in the data, the system could present a message informing the user that they need to check their devices time settings. This transfer of time data from initiator to target is potentially useful in in many types of data transactions and as stated allows a means of changing an internal crypt key in the tag and at the same time identifying the time at which the change took place. Time data could also be used by system management to estimate if the user is still close to the target site, as the tag can give a URL with some time information concatenated with the basic URL. If the user then stores this URL and accesses it later, it will be obvious as there will be a relative time error, but the absolute time will not be important.

Similar 'data stamping' could be carried out using device location or other event-related data instead of time. Ideally, if the latter was remotely verifiable e.g. temperature, RF transmission (for example a regular encoded sequence from a remote system such as WiFi access node, GSM base station or mobile unit, GPS satellite, radio station etc) or acquired from a device directly or indirectly networked e.g. via the Internet to the management system, then additional information regarding when and where the tag was tapped and the data-stamped information received could be inferred.

### Tag States

Tags tend to go through a life-cycle e.g. ordering, delivery, deployment, test, decommissioning. For this reason, there are times when it is useful for tag data to reflect the life-cycle phase of the tag. For example, you could design a tag that could not be re-encoded until it had been tapped n times, where each tap could include the transmission by the initiator of phase-related data that the tag uses to trigger an internal data and/or state change.

As an example, Janet orders 25 tags in a specific form factor and does not want them to be used by anyone until she is happy they have been correctly deployed. The tags are tapped once on receipt by Janet and the tag tapped and/or all the tags in that order are arranged to change states, perhaps on receipt of specific data during the process (e.g. related to Janet's user account).

The tags are tapped again when they are assigned by Janet to a specific customer or tag group, for deployment perhaps. Again, the tags change state on receipt of the expected data and again the state change could reflect data received during the transition.

Note that these state changes are not the same as simply re-encoding the tag. The tag is locked at this stage and normal encoding is not possible.

Finally, the tags are attached to objects and tapped again with another data transmission by the initiator. This time the tag changes state one last time and commences a standard mode of operation, whereby it can be encoded and locked/unlocked etc as normal.

### Other Modification Methods

### Monitoring RF activity

Whatever process is used to modify tag data, it may be useful to associate the modification with a specific trigger. The triggering process may also deliver the information required for data modification.

For example, tags can be arranged to monitor certain radio wavelengths and respond to specific data or signals. To facilitate this, they may use the infrastructure on which they are installed to serve as an antenna or to boost reception. Tags can be arranged to monitor the signals broadcast by commercial radio stations or by specific systems such as time signalling systems. The benefit here is that the signal received by the tag can also be received or monitored by a remote management system, so that if the tag is arranged to self-modify on receipt of a specific signal or data element, the remote management system can also determine when self-modification has been triggered.

Proprietary radio networks could be used to trigger data variations and/or deliver data. For example, certain wavelengths have properties well suited to local area services and a system could be constructed to broadcast signals which could be received by tags and used to modify data.

Tags could be constructed to receive such broadcasts or, indeed, to detect other natural or artificial RF activity. Some RF activity (e.g. as generated by solar flares) can be widely distributed on the earth's surface. Tags in a known area could detect this activity, apply certain criteria to it, and in dependence on that process carry out data modification. A remote system, having the same criteria and able to detect the same RF activity could then be configured to identify the result of the data modification carried out by the tags.

Local Wi-Fi, Bluetooth and other wireless technologies could be invoked to assist in these processes where possible. Transmissions could be modified, for example to incorporate interstitial data that, without affecting their normal operation, could be used to manage appropriately configured tags.

RF activity generated by electronic equipment could be usefully applied to data management. For example, by knowing the exact model of electronic display, one might determine a frequency range with the optimum signal to noise ratio for a suitably configured tag to 'eavesdrop'. The display can then be used as a management device for a tag. In practise, this can provide a useful solution where tags can not only be associated with changing visual display information (for example, a display could say 'Tap here for the News' at 9am and 'Tap here for the Weather' at 9.30am and an associated tag could provide the data e.g. a URL to enable access to the relevant content) but can also have their content modified by the display itself. A remote system could send specific display signals or other control data to a unit, causing corresponding RF activity that can then be detected by the tag. In these cases the tag would not need any physical connection to the display, reducing design manufacturing and maintenance costs. The same RF activity could also be used to power the tag (see later).

Proprietary radio networks could be used to trigger data variations. For example, certain wavelengths have properties well suited to local area services and a system could be constructed to broadcast signals which could be received by tags and used to modify data.

RF detection requires an antenna of some kind. An antenna may be incorporated into the tag or the tag may connect to some external structure capable of acting as an antenna. Window frames, equipment chassis and casings, bicycle or automotive components and structure, cabling, yacht stays, balustrades etc all provide possibilities for use as antennae.

Mobile telephone networks can also be used for this purpose. Tags can be arranged in combination with either internal or external systems to communicate via a mobile telephone network or even simply to detect local mobile phone transmissions and use them as a trigger for self-modification (e.g. in association with the amount of mobile signals detected). A specific tag could even have a specific telephone number associated with it and an operative could 'call' the tag and pass data to the tag to trigger or otherwise inform a modification process. The call would not need to be answered: the operative could modify the CLI (Calling Line Identity) information or send USSD (Unstructured Supplementary Service Data) or even SMS (Short Message Service) data for detection by the tag, which could be arranged to self-modify differently in response to different data. A tag could even be arranged to send a confirmation that it had self-modified correctly, perhaps via information in a URL transferred from the tag during the next transaction with an initiator

### Audio, light and other sensor mechanisms

Many of the processes outlined above could use a different carrier technology to RF: for example, audio signals (e.g. above or below the threshold of human hearing but detectable by a microphone), light signalling including infra-red and ultra violet, movement and magnetic field variation.

Referring back to the state sequence earlier, tags could also change state in response to triggers. So for example, a tag may unlock itself to allow subsequent re-encoding by a user in response to a specific trigger event. A tag could exit normal operations and revert to the initial pre-operative state on receipt of a specific trigger, which would mean it would need to once again transition through the various states before reverting once more to normal operation.

### Powering Tag Processes

Tags may rely entirely on power acquired during the interaction with an initiator. Generally speaking, users tap tags quickly. The tags are arranged to acquire no more than the amount of energy required to power the data transaction with the initiator. If a tag needs to carry out other internal processes, including self modification and other processes outlined herein, it may require additional power. It may also need more time to carry out modification processes: for example, the time required to 'warm up' a receiving circuit in order to detect a radio station.

### Extended tap and feedback

The easiest way to do this would be to get the interrogating reader device (the 'tapper') to provide the power. For example, a tag could be arranged to delay completion of a process until it had gathered enough power (and perhaps also enough time) to enable another process such as rewriting internal data ('extended tap'). It could inform the user of its power status, so that the user did not for example withdraw the initiating device too soon. This feedback could be provided audibly using any combination of light or sound.

For example, a tag could inform John that he can acquire the service he needs by holding his mobile phone against the tag until the light turns green and/or he hears a beep, with a warning that this could take some time! The standard initiator/target process could therefore be modified to delay confirmation to the user of completion or initiation. John could be presented on his initiating device with a progress report or such-like relating to the process. For example, a progress bar could move across the screen of his mobile phone, indicating intermediate states. A further method to encourage users to cooperate with this process is to offer some benefit to the user in the form of some credit or discount with an associated supplier or additional privileges or any other like tangible or intangible benefit. The accrual of such benefits to the user could also be indicated to the user with some form of screen display to encourage maintaining contact until completion of the desired process in the tag. (e.g. "You have now received 10 system credits...20 system credits...30 system credits" etc to indicate a benefit to John). If he removes his phone from the tag before the powering process has completed, his benefit is reduced. In any event, the initiator and target can work together to maximise the powering time and also to feed back status on the process and the various stages thereof to a remote device or management system.

This feedback process could also be used if the tag required additional time not just to receive or modify data, but also to transmit it to the initiator. At present, tag memory limits are low. In future, tags could incorporate gigabytes of local memory and the transfer of information to an initiator could require more time. Again, a similar feedback process could enable the user to know when data transfer was complete.

A feedback process could be interrupted to acquire user input to allow the process to continue. For example, John could power a tag to carry out the first phase of a process - perhaps modifying one of the different data stores referred to earlier - but would be required to remove his phone and enter a code before replacing his phone against the tag and powering subsequent stages of the process.

The feedback process could also be accompanied by the display of interstitial data - information not explicitly related to the tapping transaction, for example an advertisement. The feedback and any of this associated information could also be displayed on an adjacent device or on a visual display unit into which the functionality provided by the tag or a discrete tag had been embedded.

For example, John might want to watch a movie in a cafe. He approaches a unit on wall which displays that a promotional download is available and indicates the transfer point. John holds his device against the transfer point (an 'extended tap') and the tag circuitry and initiator are separately arranged to provided feedback on the data transfer process or other tap-related processes to the visual display, which then communicates them to the user. This could include error information, interstitial advertising and promotions (possibly acquired from a remote management system that has been informed of the data transfer and has delivered appropriate content to the display device). When he can see that the movie has downloaded, John removes his device. This method would enable the use of very limited range wireless transactions between initiators and other devices in general and not simply between initiators and tags.

The extended tap process could involve interaction with other devices. John's attempt to power the device and complete a process might be interrupted - or the outcome of the process might be different - if communication by either initiator or target with another device - a sensor or third party database for example - resulted in a data transaction that could be used to modify the process. For instance, a user could be required to re-encrypt the value of a tag on an ATM, but the re-encryption process might be halted if the user's account status was found to be invalid.

The extended tap process could also trigger additional procedures within the target. For example, the tap process could be associated with an internal timer on the target or initiator and/or the monitoring of associated power levels within the target. Once the timer or levels met with certain criteria, the tag could for example deliver content to the initiator from a specific data store, or otherwise modify the content for delivery to the initiator. As an example, consider a situation where you have two or more classes of end-user and wish to deliver different content from the tag to each class. Each class of users would be instructed to maintain contact with the tag for at least, or no more than, a certain period and the tag could deliver different content accordingly. Again, this process could be associated with feedback to the user on the initiator or even on the tag itself if additional visual display or other feedback mechanisms were designed around it. Alternatively, the initiator could be arranged to respond to data received from the tag in a manner that depended on the length of the tap, perhaps in response to signals (eg timing signals) from the tag if the latter were arranged to generate the same.

### Multi-tap

Alternatively, the tag could work with a remote management system to encourage the user to tap more than once ('multi tap'), with the tag harvesting power from each tap. A typical process could be illustrated by:
- John taps the tag with his phone. His phone's browser displays the message 'We have a special prize for you, please tap the tag again'.
- John taps the tag again; optionally the data received from the tag this time could provide the remote management system via a parameterised URL or some other means with data relating to self modification e.g. that it had taken place successfully or not.
- Optionally, more taps could be requested.

Tags that are arranged to use radio signals including GSM, Wi-Fi, DAB etc as triggers or for other functions may need time to 'wake up' the circuits involved. In this case, there may be both a power and time requirement. Extended and multi-tap embodiments could be configured to cater for this.

A small amount of energy may be gained by delaying the "beep" acknowledging the transaction. Power requirements for reprogramming can be kept low by doing the reprogramming incrementally. For example, a tag may be arranged to carry out an encryption process in stages, with each stage being powered by a single tap. Once the process is complete, the tag is able on the next tap transaction to provide data that not only includes the newly modified data but also feedback data on the times, dates, devices or other variables involved in the previous tap events that formed part of the process.

In the case of some user devices, the power cost of feedback can be largely born by the user device. E.g., the tag notifies the user device to generate user feedback on the tag internal processes. This process can be extended to allow a user to get feedback on different stages of any the tag processes outlined in this document, including unlocking, re-encrypting etc.

The extra energy acquired can also be used to power some other form of communications channel such as time signals, cellular receiver to get time or other info, PMR, ISM radio etc.

Multi-tap could also be used, as with extended tap, to modify the data delivered by the tag. For example, every fifth tapper could receive data that, in conjunction with the initiator or some other user interface, alert them to the availability of a special prize. Alternatively, the initiator could communicate with the management system and determine how many times a tag had been tapped, perhaps also applying time and date or other criteria, and in dependence on that information present different content to the user.

### Multi Tap Group Processes

It would be possible to create a multi-tap system that relied on more than one tag and/or user and more than one device to read the tags. Group tag modification could be useful at large scale sports occasions and other events.

Multiple taps, perhaps in a specified sequence or frequency or other predetermined pattern, perhaps varying according to the users, devices, locations or other criteria involved, could result in information passed by the tags being responded to by the reading devices and then perhaps used to trigger modification and/or to compute a value for writing back to one or more of the tags involved.

When the criteria required for triggering a change in data on one tag in a network are met, the same criteria can be considered as met for the other tags in that network.

For example, in the event that of a fire or other emergency in a crowded area, members of the public might tap tags which are designed to provide, inter alia, an emergency reporting function. In the event that multiple users in a short period of time tap the tags, a modification process could be triggered.

In this way, an interconnected matrix of tags can be constructed with specific relationships between single tags or groups of tags, where cascading data modifications take place depending on local conditions, tag usage or other criteria.

As elsewhere in this document, such data can be embedded in the tag data and/or associated with the tag on a management system or elsewhere and it can also be modified by users. For example, every time someone taps the tag, a system could be constructed to read the tapping device location, compare it with the tag location formula (see later), and if it is outside the expected range or in some other way suggests that the formula should be amended, the device could be arranged to trigger, authenticate, and/or carry out suitable modification of the formula and associated data, optionally with the updating of an associated event log related to such modification. Group behaviour by users could be employed here to determine tag-related processes, triggering modification and enabling the network of tags either singly or collectively to offer different features content and data.

User history plays an important part in group user behaviour and data modification. For example, take two users who are consistently in each other's company at the weekends, as evidenced by location or other data; one user taps Tag A and the other taps Tag B, both tags being in close proximity. This could help determine the validity value assigned to the presumed location of either user (see also 'Variable Validity', later).

### Other power sources

Kinetic energy could also be used to power self modification and related processes. A tag could be part of a system that uses a spring-loaded panel or other physical mechanism which the user moves, perhaps when 'tapping' the tag, and which generates sufficient power using for example a piezoelectrical solution. For example, a user might be instructed to press a lever or button or other controller to initiate a tag transaction, before actually tapping the tag with his device. The tag could then be powered and read in two distinct processes.

Alternatively tags could be associated with other moving parts including doors, windows, appliance and vehicle parts etc to generate the power they require to self modify. They could also use solar or wind energy and other power sources that require little or no maintenance. In some situations, it may be possible to harvest sufficient power from natural or artificial radio waves via an antenna which may work in combination with the infrastructure on which the tag is deployed.

In some circumstances, tags could employ other means of powering internal processes, including electrolytic, magnetic induction, proximity induction, piezoelectric/mechanical, and thermo coupling methods. Tags could possibly be constructed for insertion into plant and other living organisms e.g. trees etc which, once in situ, could use electrolysis to power themselves.

### Arranging tags and other devices to provide permanent power sources

Even more useful is where a tag is effectively powered by inductance from a fixed but separate and usually independently powered unit. For example, it could be necessary to change the website viewed by users when they tap a tag and therefore to inform users on a similarly variable basis about that content. In that example, the separate unit could be a visual display, electronic sign, radio or other unit presenting information to local users.

The separate unit could then provide constantly updated information, perhaps from TV or radio broadcasts, or over the Internet or local network, which is synchronised with the information that would be presented to the user via their device if they tap the tag at that time. The same separate unit could also be configured to generate power by inductance within the tag, which is either embedded within or otherwise in close proximity to the separate unit, enabling the tag to power internal processes as described herein elsewhere.

In such cases, the tag could be arranged to manage its own power levels, perhaps at different levels over time and in dependence on other criteria. For example, a tag may carry on one set of processes immediately after it is tapped, which would require greater amounts of energy. In this case, tapping a tag could also trigger it to increase its own power requirement levels on a temporary basis. In the example above, the increased power could be acquired from the adjacent unit.

### Verifying the information on a tag

Circumstances can arise where it is reasonable to expect that someone has tampered with the information on a tag.

It would be possible to create a system that relied on more than one tag where a device read the tags in a particular sequence, perhaps varying according to the user, device, location or other criteria. The information passed by one or more of the tags could be analysed by the reading device in reference to the other content acquired, source tag, sequence of tap or other criteria or combination thereof. It could be compared with a value delivered by one or more of the tags to determine whether that value is valid or not.

For example, an operative could be authorised to update the information on specific tags only. The operative could carry a tag ('Tag 1'). He wishes to update the information on Tag 2. He taps Tag 1 and the reading device validates the data on Tag 1; he then taps Tag 2. The reading device compares the data on both tags and either alone or in conjunction with a remote management system determines whether or not the carrier of Tag 1 is permitted to modify the data on Tag 2. It could determine the outcome in dependence on other data as well and/or in combination with the information acquired from the tags, for example time, date, location e.g. of the tag or user, temperature, current or historical sensor data etc. It could optionally delivery a one-time code to the operative, or request user input, which is then used to authenticate data modification.

When working with standard technologies such as NFC, it may be necessary to use a higher security tag system in addition to the standard NFC tag. For example, an NFC tag could carry information for one set of users, but the encoding of that tag and/or information related to the context in which it was deployed could be verified by a third party in combination with data acquired from e-passport or car immobiliser or other similar embodiments which would carry secure data.

If using LF energised hardware, such as a car immobiliser, one could use a loop antenna around the tag deployment site or object. This could in turn could be linked to the tag location position with a fixed reader. A large coil would mean quite lax positioning. In this way a dual technology process could enable both position fixing (e.g. within a department store) and the acquisition of specific content from an object in that position using standardised NFC technology.

### Variable validity

The processes described herein may provide a partial solution to Network Cloning, sufficiently robust for many applications. However, in some instances it would be possible for a user to acquire modified data, store it on their device, and either use it later or forward it to others. This would enable any user, on receipt of this data, to submit it to the web server using their browser and receive the content, perhaps without having tapped the tag at all, or having tapped it in the past.

There may be cases where this would be undesirable; for example, one might want to have a greater degree of certainty that the user accessing a web server using a URL acquired from a tag had actually tapped the originating tag themselves (or had just tapped it), rather than simply using a stored or forwarded URL.

One might therefore want to ensure that a URL had variable validity (e.g. it might point to different content, or not work at all) in terms of time, place, or other criteria associated with the original transaction by which it was acquired or other conditions (e.g the location of the user at the time the URL was presented, the local temperature etc). Note that this is different from the data having absolute validity, in which case there would most likely only be two appropriate responses.

Tag and/or location may be important in determining whether or not data received by a system from a tag (or assumed to be received from the tag) fits certain criteria for validity. For example, a system could compare the location of tag (which could be embedded in the code stored on and received from the tag or held remotely in association with the tag record) with the location of the reading device (e.g. mobile phone location, using GPS, network location, WiFi or IP or other location technology). If the two do not match sufficiently closely, it could be assumed that the tag code has not been received as a result of a tap transaction immediately prior to the communication of the tag data to the system.

However, tag locations may change. In some cases, the location of a tag may be defined on a management system or elsewhere as a series of vectors, routes or other patterns of location behaviour. The latter can also include territories and ranges, with or without reference to associated mapping displays (e.g. the tag is located 'somewhere in the area identified on the following map'; the tag is located 'in Greater London', or "within x yards of the fixed point A"). These location formulae can have variable certainty defined. For example, in the case of a bicycle for hire in Central London, a tag embedded on the bicycle may have a location formula which defines the percentage probability - in this case likely to be near 100% - that the bicycle is within the city limits. In the case of a route, in which a bus travels from A to B via C on Mondays but via D on the rest of the week, the location formula may be constructed from information relating to time, date and location to deliver variable probabilities of the tag location at any time or overall.

### Location of Tags

In addition to improvement in user experience, tag processes have other benefits for operators and users. For example, where the tag is embedded into an object with a static geo-location (for example, a lamp-post), that geo-location could, in a remote database, be associated with the data acquired from the tag. The act of tapping the tag with a handset could thus be used, by reference to that database, to indicate the exact position of the user at that exact time.

Geo-location is not the only type of location however. There is also contextual location in the sense of being associated with some object, type of object or premises (where it is impractical to associate the latter with a geo-location value) e.g. 'on a bottle of Mouton Cadet 2004'. This would be of considerable commercial value if, for example, the tag were to be located in the Premium Wines department in a large store. The address (in the form of a URL) transmitted by the tag could be parameterised to contain the identity of that tag. When the handset in question connects to the web server at that URL, the web server can deduce which tag has resulted in the connection being made, look it up in an internal database to see where it was located, and then send the appropriate content to the mobile handset browser. In this example, the content could be additional information on special offers about the wines on sale in the department.

### Impulse Access

Another important benefit of tags relates to impulse service access. For example, there is a statue in London's Kensington Gardens of Peter Pan. This statue is visited by thousands of tourists each week, but it would be unlikely that many, if any, of the visitors would take the opportunity, when looking at the statue, to get out their smartphones and search for more information on it. If the idea does occur to them, they may be dissuaded by the inconvenience of carrying out an Internet search.

However, if a tag with a suitable proposition were visible on the statue, users might (if they had a suitable device) be more likely to tap the tag 'on impulse' to acquire the information quickly and without searching for it.

Ideally, a tag should be able to service multiple business related data transfer propositions. For example, in a café one might want to persuade customers to tap a tag on Mondays to get free music and on Tuesdays to get a free e-book. So it could be useful to associate tags with visual displays that can be updated with different propositions.

Impulse transactions are driven by the end-user, who chooses to follow up on the proposition presented. For this reason, as well as driving additional traffic, they also avoid the need for marketeers to secure the marketing opt-ins required by many other direct marketing systems.

### Multiple Applications

There are numerous opportunities for enhancing our experience of every-day activities by using a smartphone to access related services and information. For example, RFID or NFC tags can be distributed throughout a clearly defined geographical area with consistent visual branding, identifying a 'tourist route', with accompanying information and services at each stage of the route.

Since passive tags require no power and can be made weather-proof, they can provide quick and easy service/information access in very varied locations. Likewise, Bluetooth low energy beacons can be used with limited energy sources such as batteries that may provide sufficient power to maintain the beacon as a tag for the lifetime of the offer/service.

Tags also provide a direct means of interacting with the any or all of the available data relevant (the 'data footprint') to a particular physical object. For example, bottles of wine may be associated with a wide variety of information, ranging from simple vintage information (grape variety, year etc) through to availability of similar vintages, third party reviews, a history of the vineyard, and public comments etc.

A tag can also act as the network access mechanism (e.g. via an NFC equipped smartphone) for an associated sensor or other device. The tags may be used in combination with other environmental or local based data. For example, discrete components such as tags and heat sensors are fairly cheap and it can make sense to create assemblies where the two together provide both the sensing and the data acquisition functions required, rather than designing a more fully integrated solution.

For example, tags linked to sensors can deliver information on physical movement (e.g. the dropping of a delicate piece of equipment), temperature ranges, humidity, radiation exposure, acceleration, speed, movement etc.

Tags are also widely used for access control, for example on hotel room door locks and in future are likely to play an increasingly significant role in payment processing.

It is to be appreciated that at least parts of certain embodiments of the invention as discussed above may be incorporated as code (e.g., a software algorithm or program) residing in firmware and/or on computer useable medium having control logic for enabling execution on a computer system having a computer processor. Such a computer system typically includes memory storage configured to provide output from execution of the code which configures a processor in accordance with the execution. The code can be arranged as firmware or software, and can be organized as a set of modules such as discrete code modules, function calls, procedure calls or objects in an object-oriented programming environment. If implemented using modules, the code can comprise a single module or a plurality of modules that operate in cooperation with one another.

Optional embodiments of the invention can be understood as including the parts, elements and features referred to or indicated herein, individually or collectively, in any or all combinations of two or more of the parts, elements or features, and wherein specific integers are mentioned herein which have known equivalents in the art to which the invention relates, such known equivalents are deemed to be incorporated herein as if individually set forth.

Although illustrated embodiments of the present invention have been described, it should be understood that various changes, substitutions, and alterations can be made by one of ordinary skill in the art without departing from the present invention which is defined by the recitations in the claims below and equivalents thereof.

## Claims

1. A communication tag including a processor and a communication unit, wherein the processor is arranged to generate an address to a remote resource, the address having a fixed component and a variable component, the processor being arranged to communicate the address to a remote tag reader for establishing communication between the remote tag reader and the remote resource.

2. A communication tag as claimed in claim 1, wherein the processor is arranged to generate the variable component, the variable component encoding data depending on circumstances arising at the time of generation of the address.

3. A communication tag as claimed in claim 1 or 2, wherein the processor is arranged to generate the variable component, the variable component being substantially non-sequential.

4. A communication tag as claimed in claim 2, wherein the processor is arranged to generate the variable component in dependence on a time measurement associated with the time at which the variable component was generated.

5. A communication tag as claimed in any preceding claim, wherein the processor is arranged to encrypt at least a portion of the variable component.

6. A communication tag as claimed in claim 4, wherein the encrypted portion is based on one or more other parameters in the variable component.

7. A communication tag as claimed in claim 5 or 6, wherein the encrypted portion comprises a cryptographic hash.

8. A communication tag as claimed in any preceding claim, wherein the tag comprises a selected one of: an RFID tag, an NFC tag or a Bluetooth low energy device.

9. A communication tag as claimed in any preceding claim when dependent on claim 2, the circumstances including one or more of data received from a sensor on environmental conditions, data on location, data received from a sensor on network conditions; data received from a sensor monitoring one or more physical attributes of the tag; data on a current state of the tag.

10. A communication system comprising:
a remote resource; and,
a communication tag as claimed in any preceding claim, wherein the address is an address of the remote resource, the processor being arranged to communicate the address to a remote tag reader system for establishing, in dependence on the address, a communication session between the remote tag reader and the remote resource.

11. A system arranged to receive a communication from a communication tag reader, the communication being dependent on data obtained by the communication tag reader from a communication tag and being addressed to an address having a fixed component and a variable component, wherein, in dependence on at least the variable component, the system being arranged to return data to the tag reader.

12. A system as claimed in claim 11, wherein the returned data comprises data for use in further communications with said tag.

13. A system as claimed in claim 11 or 12, the system being arranged to validate at least a portion of the variable component as having been generated at the communication tag and return data to the tag reader in dependence on the validation.

14. A system as claimed in claim 11, 12 or 13, wherein the variable component includes encrypted timing data, the system being arranged to decrypt and validate the encrypted timing data, and to return the data to the tag reader in dependence on the validation.

15. A data communications method comprising:
generating, at a communication tag, an address to a remote resource, the address having a fixed component and a variable component,
communicating the address to a remote tag reader;
establishing communication between the remote tag reader and the remote resource using the address; and,
returning, in dependence on at least the variable component, data from the remote resource to the tag reader.
